# EUROPEAN PATENT APPLICATION

(11) **EP 0 617 538 A1**
(43) Date of publication of application: **28.09.1994**
(21) Application number: 94104740.9
(22) Date of filing: 24.03.1994
(51) Int. Cl.: H04M 3/56

(54) **Enhanced telephone conferencing equipment**

(30) Priority: 26.03.1993 US 37195
(71) Applicant: Siemens Rolm Communications Inc. (a Delaware corp.), Santa Clara, CA 95052 (US)
(72) Inventor: Locke, Michael Eugene, Santa Carla, CA 95051 (US)
(74) Representative: Fuchs, Franz-Josef, Dr.-Ing.

(57) **Abstract**

Telephone conferencing through a switch-resident conference bridge can be enhanced by permitting a remote user to initiate and control a conference using DTMF tones. It can be accomplished by using a DTMF receiver in cooperation with a delay circuit.

## Description

### Field of the Invention

This invention relates to telephone conferencing equipment. Specifically, the invention concerns a device that enables an off-premises station to control the conference bridge in a switch.

### Background of the Invention

There are several known methods for conducting a telephone conference. Some telephone systems permit conferencing by selecting feature keys or flashing the hook-switch. To do this, the initiator of the conference must be local to the telephone switch containing the conferencing equipment so that these signals will be recognized by the switch. If the user is remote, another person, such as the switch operator, whose hook-switch signals will be acknowledged, must initiate the conference.

Proximity to the switch is also required because switches will not recognize DTMF (dual tone multi-frequency) tones as control signals without first receiving and recognizing a hook-switch flash. Moreover, even if it were feasible to use DTMF, any such DTMF tones would be transmitted to all parties in a conference at unacceptably loud levels. Also, other parties in the conference could themselves generate DTMF signals, resulting in a loss of control for the initiating party.

Generally, only one party can be conferenced at a time. This requires parties that have already been connected to wait. Also, where some of the parties have been reached via long distance, additional toll charges will be incurred.

Arguably, when the initiator is not local to the switch, for example at a hotel in a distant city, a human operator can set up the conference call. This of course requires the allocation of a person, increasing the cost and complexity of initiating a conference. Still, as with the other known methods of conferencing, only one party can be conferenced at a time and the initiator cannot use DTMF to control the conference, or any other functions provided by the switch.

Instead of using a live operator or having the initiator conference in the parties, an automatic device could set up the call. The initiator would enter the telephone numbers of each of the conference participants in advance. Then, at a predetermined time, the equipment would make the necessary calls, conferencing the parties together. The drawbacks to such a system is the lack of human control, the inability to use DTMF tones as a means of controlling the conference, and the inability to access DTMF-controlled equipment. Thus, it is desirable to have the capability of conferencing using DTMF-controlled conference equipment.

### Summary of the Invention

This and other objects are achieved by the conference control device described here. The device is responsive to inchannel signals, i.e., signals physically on the same transmission line, received from a controlling user. In one embodiment, inband signals, i.e., of the same frequency as the voice and/or data carried by the telephone system, and, more specifically, DTMF signals, are employed.

The device has two interfaces, an input interface and an output interface, between which there are two internal directional paths, incoming and outgoing. The interfaces are each connected to the bus of a switch by external incoming and outgoing bidirectional lines, the incoming bidirectional line being connected through the bus to the conference initiator and the outgoing bidirectional line being connected through the bus to the conference participants.

The incoming path has a DTMF receiver for intercepting incoming DTMF sent by the controlling user and preventing DTMF from passing onto the outgoing lines of the switch. When a DTMF signal is present at the input to the device, the DTMF receiver opens the incoming line and enables a control processor. The control processor issues a hook-switch flash that is placed on the outgoing bidirectional line to the switch, taking the controlling user's station off line, and then issues DTMF or other control signals to the switch. This permits the controlling user's station to initiate and control the conference using DTMF.

As a refinement, the control processor can enable a prompt generator that sends either tone or voice prompts onto the internal outgoing line for receipt by the controlling user. The actual connection can be an adder circuit placed in the internal outgoing line.

Another variation of the invention permits voice recording and, if desired, from both the incoming and the outgoing paths. An adder circuit is placed between the internal incoming and outgoing lines of the conference control device, and the output of the adder circuit is connected to the voice recording equipment. One may also provide independent level controls for the incoming and outgoing channels to allow for uniform recording. The level control circuits can be inserted between a channel and the input to the adder circuit.

Similarly, one can provide a voice output module to allow the conference control device to provide messages to users. This feature can also be used to generate the warning tones required by law when recording.

The conference control device can also be configured to prevent echoing of DTMF tones originating with other users that could possibly confuse the incoming DTMF receiver in the conference control device. In one arrangement, an intercept DTMF receiver connected to the outgoing channel of the conference control device disables the line coupling the output of the incoming DTMF receiver to the control processor. Another method of achieving this result uses a dynamic echo canceler inserted in the incoming line ahead of the incoming DTMF receiver. Yet another variation of the conference control device offers parallel call setup through multiple-line control interfacing with the switch. A multiple-channel voice output and call progress monitor, controlled by the control processor in the conference control device connects to the switch. When activated, the multiple-channel voice output and call progress monitor automatically dials the conference stations. When stations answer, it routes them to the conference bridge in the switch. A refinement of this arrangement offers call-back outcalling. When this feature is selected, the conference control device will call back to the controlling user station for further instructions once the conference is established.

### Brief Description of the Drawings

A more complete understanding of the present invention, as well as other objects and advantages thereof not enumerated herein, will become apparent upon consideration of the following detailed description and the accompanying drawings, wherein:
Figure 1 is a schematic block diagram of an enhanced telephone conferencing system incorporating the conference control device;
Figure 2 is a schematic block diagram of the conference control device incorporating voice recording;
Figure 3 is a schematic block diagram of the conference control device incorporating level control for voice recording;
Figure 4 is a schematic block diagram of the conference control device incorporating voice output;
Figure 5 is a schematic block diagram of the conference control device incorporating an intercept for spurious DTMF signals;
Figure 6 is a schematic block diagram of the conference control device incorporating echo cancellation for intercepting spurious DTMF signals; and
Figure 7 is a schematic block diagram of the conference control device incorporating multiple line dialing and control.

### Detailed Description of the Invention

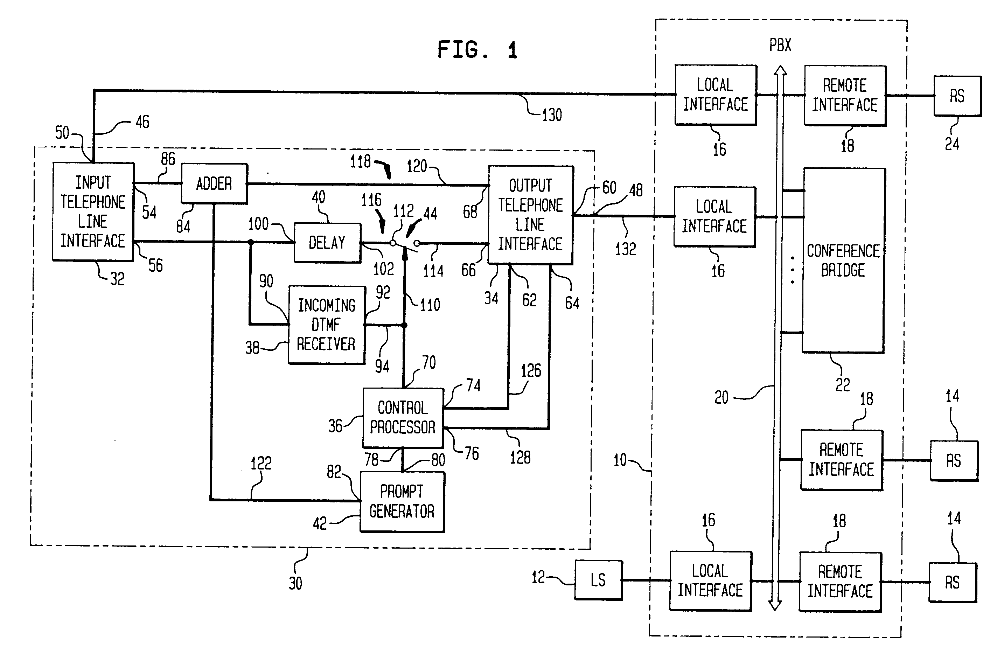

The enhanced telephone conferencing system is shown generally in Figure 1. The system includes a switch or PBX 10 ("private branch exchange"), local subscriber stations 12, and remote stations 14. The PBX 10 has several local telephone interfaces 16 and remote telephone interfaces 18 for connecting the PBX 10 to local subscriber stations 12 and remote stations 14, respectively. The interfaces 16 and 18 are in turn connected to a TDM (time-division multiplexed) bus 20. A conference bridge 22 is also connected to the TDM bus 20. One of the remote stations 24 is designated the controlling user.

The enhanced conferencing features are provided by a conference control device 30, which is responsive to inchannel signals received from the controlling user 24. In the implementation described here, inband signals and, more specifically, DTMF signals, are employed.

The conference control device 30 contains an input telephone line interface 32, an output telephone line interface 34, a control processor 36, an incoming DTMF receiver 38, a delay module 40, a prompt generator 42, and a path interrupt switch 44. Although shown open in the figure for purposes of illustration (and in all subsequent figures), the switch 44 is normally closed; it opens when a control input is present. The conference control device 30 has an input 46 and an output 48.

The input telephone line interface 32 has three ports: a bidirectional line input 50, an outgoing line input 54, and an incoming line output 56. The output telephone line interface 34 has five ports: a bidirectional line input 60, a hook-switch control input 62, a DTMF signalling input 64, an incoming line input 66, and an outgoing line output 68.

The control processor 36 has four ports: a DTMF input 70, a hook-switch control output 74, a DTMF signalling output 76, and a prompt generator output 78. The prompt generator 42 has two ports: an input 80 and an output 82. The prompt generator output 78 of the control processor 36 is connected to the input 80 of the prompt generator 42.

The incoming DTMF receiver 38 has two ports: an input 90 and an output 92. Similarly, the delay module 40 has two ports: an input 100 and an output 102. The inputs 90 and 100 of the incoming DTMF receiver 38 and the delay module 40, respectively, are tied to the incoming line output 56 of the input telephone line interface 32. The output 92 of the incoming DTMF receiver 38 is connected by a DTMF received line 94 to the control input 110 of the path interrupt switch 44 and the DTMF input 70 of the control processor 36. The output 102 of the delay module 40 is connected to the signal input 112 of the path interrupt switch 44; the output 114 of the switch 44 is connected to the incoming line input 66. Collectively, the output 56, the incoming DTMF receiver 38, the delay 40, the switch 44, and the incoming line input 66 form the internal incoming path 116 of the conference control device.

Several more lines complete the circuit of the conference control device 30. The outgoing line output 68 of the output telephone line interface 34 is connected by an outgoing line 120 to an adder circuit 84, which receives the output 82 of the prompt generator 42 on a prompt line 122. An adder output line 86 connects the adder circuit 84 to the outgoing line input 54 of the input telephone line interface 32. Collectively, the outgoing line output 68, the outgoing line 120, the adder circuit 84, the adder output line 86, and the outgoing line input 54 form the internal outgoing path 118 of the conference control device.

Finally, the control processor 36 has two lines going to the output telephone line interface 34. A hook-switch control line 126 connects the hook-switch control output 74 of the control processor 36 to the hook-switch control input 62 of the output telephone line interface 34. A DTMF signalling line 128 connects the DTMF signalling output 76 of the control processor 36 to the DTMF signalling input 64 of the output telephone line interface 34.

The conference control device 30 is connected to the PBX 10 by an incoming bidirectional line 130 at its input 46 and by an outgoing bidirectional line 132 at its output 48.

### Operation of the Conference Control Device

In practice, a user at the controlling remote station 24 would call the PBX 10 and then access the conference control device 30 using a predetermined DTMF security code. The tone sequence will pass onto the incoming bidirectional line 130, through the input telephone line interface 32, and exit at its incoming line output 56. The signal will simultaneously pass into the incoming DTMF receiver 38 and the delay module 40.

The output 92 of the incoming DTMF receiver 38 is provided to the input 110 of the path interrupt switch 44, causing the switch 44 to open and preventing the tone sequence passing through the delay module 40 from reaching the PBX 10. However, the tones are received by the control processor 36, which recognizes that the incoming caller desires to access the conference feature. In addition to signals relating to a conference request, the control processor 36 will also receive supervisory information from the input telephone line interface 32 (for call setup and disconnect).

The control processor 36 will direct the prompt generator 42 (either tone or voice) to instruct the caller to send appropriate DTMF signals to initiate and direct a conference call. Upon receipt of these control signals, the control processor 36 will then send control signals to conference in the desired parties. The PBX 10 will look for a hook-switch flash signal on the hook-switch control line 126 followed by feature codes, which are passed through the output telephone line interface 34, onto the outgoing bidirectional line 132, into the PBX 10, and ultimately to the conference bridge 22. The specifics of the prompts, the caller-generated DTMF signals, the signals sent to the PBX 10, and the feature codes are arbitrary and a matter of design choice.

Once the conference has been initiated, the conference control device 30 will function transparently until the controlling user sends DTMF signals, as the path interrupt switch 44 will remain closed, and voice signals will pass from the caller through the device 30 to the conference bridge 22.

### Voice Recording Feature

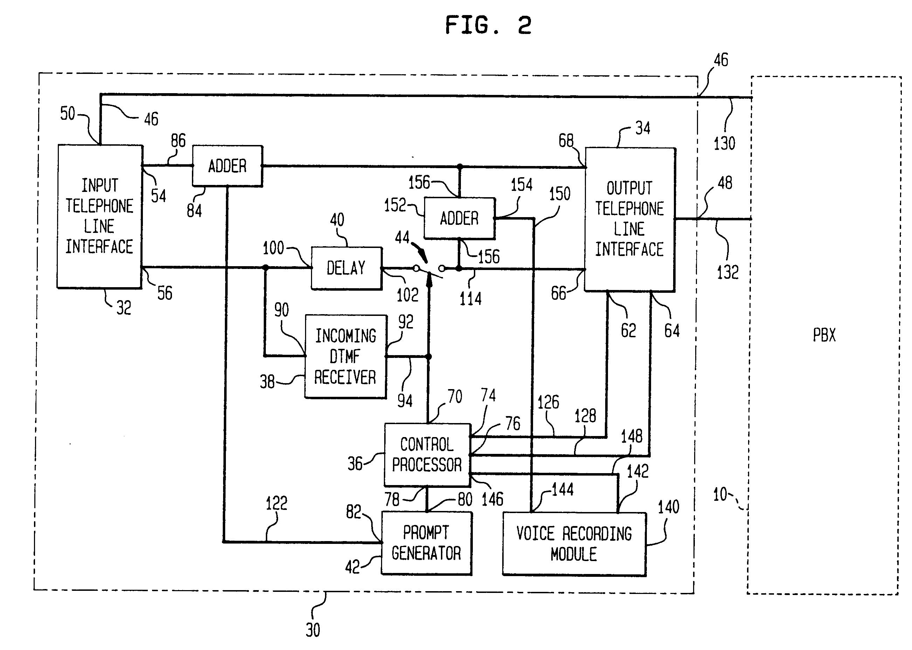

A voice recording feature may be incorporated within the structure of the conference control device 30 by adding a voice recording module 140. The voice recording module 140, shown in the circuit in Figure 2, has two ports: a control input 142 and a voice input 144. The control input 142 is connected to a voice control output 146 of the control processor 36 by a voice recording control line 148. The voice input 144 is connected by a voice line 150 to the output 154 of an adder circuit 152. The adder circuit 152 has two inputs 156, one being connected to the outgoing line 120 and the other being connected to the output 114 of the path interrupt switch 44.

When activated by the control processor 42 in response to the controlling caller's directions, the voice recording module 140 will record the audio signals of the controlling caller as well as those of the conferenced parties.

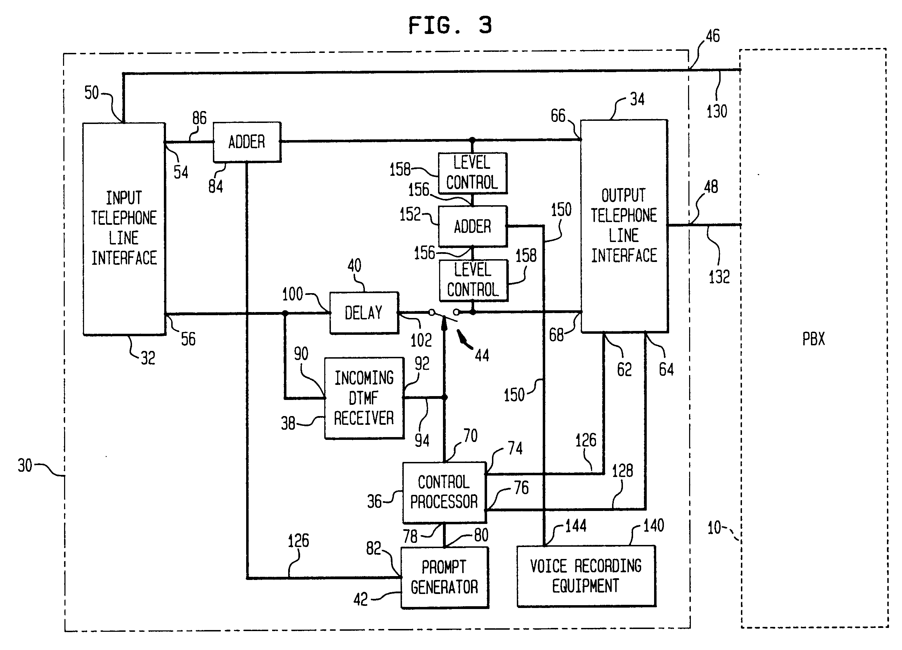

The circuit of Figure 2 could be modified as shown in Figure 3 to provide independent level controls on the incoming and outgoing channels to insure uniform recording levels. As illustrated in Figure 3, level control modules 158 are inserted between the incoming and outgoing channels and the inputs 156 of the adder 152.

### Voice Instruction Feature

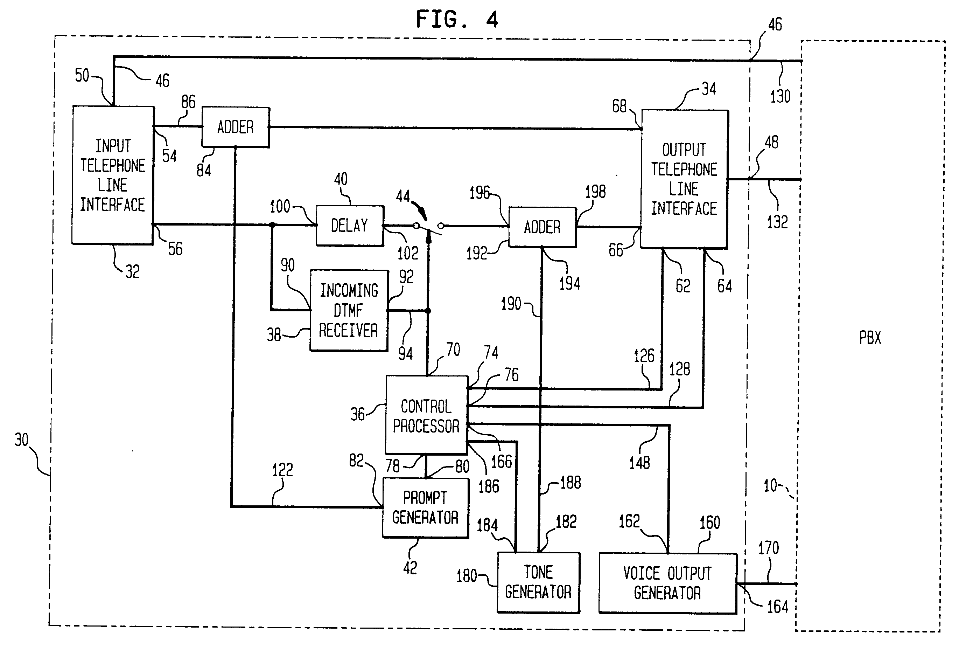

If desired, one can add voice output to both the incoming and outgoing paths to allow the conference control device 30 to provide messages to users. Referring to Figure 4, a voice output generator 160, having a control input 162 and a voice generator output 164, receives control signals from the control processor 36 at its voice generator control output 166 on a control line 168. The output of the generator 160 is provided at the voice generator output 164 to the PBX 10 on a voice line 170. Internally, the voice signal passes through a local telephone interface 16, onto the bus 20, and goes to the conference bridge 22 so that it is audible to all parties (not shown in Figure 4; see Figure 1).

If required by law, a tone generator can be added to the outgoing path. Thus, a tone generator 180 is shown in Figure 4 with a control input 182 and a tone output 184. The generator 180 receives control signals on a tone control line 188 from the control processor 36 at its tone control output 186. The tone output 184 is connected through a tone line 190 to an adder 192 at one input 194, while another input 196 provides the outgoing voice signal to the adder 192. An output 198 of the adder 192 is provided to the incoming line input 66 of the output telephone line interface 34.

### DTMF Intercept Circuit

To avoid having DTMF signals of other stations echo within the conference control device 30 and confuse the control processor 36, one can provide an intercept for DTMF signals appearing at the outgoing line output 68 of the output telephone line interface 34.

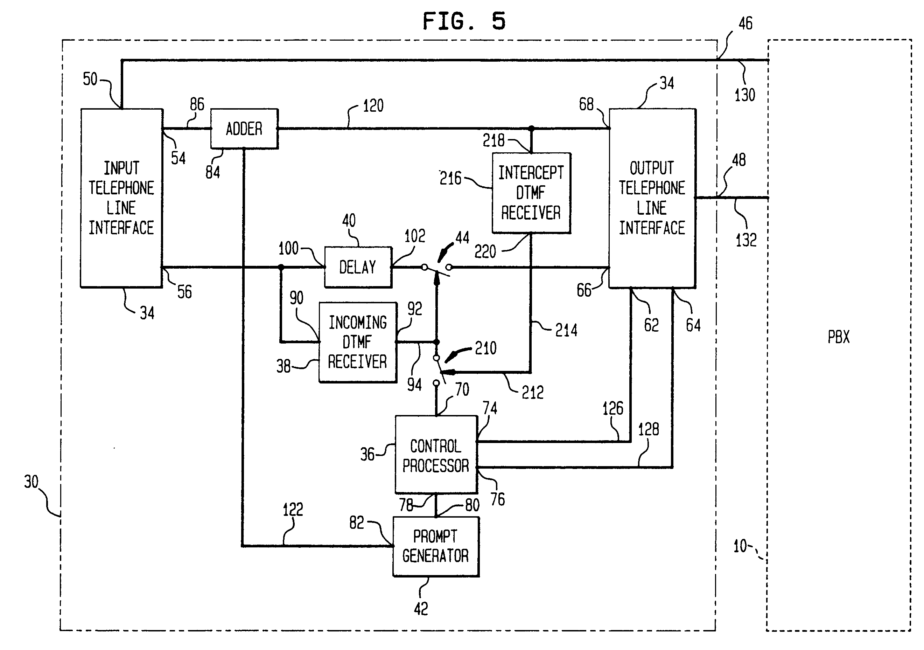

As shown in Figure 5, a DTMF intercept switch 210 is inserted in the DTMF received line 94 between the output 92 of the incoming DTMF receiver 38 and the DTMF input 70 of the control processor 36. The intercept switch 210 has a control input 212 connected by an intercept control line 214 to an intercept DTMF receiver 216. The input 218 of the receiver 216 is connected to the outgoing line 120 while its output 220 is connected to the intercept control line 214. Although shown open in the figure for purposes of illustration, the switch 210 is normally closed; it opens when a control input is present.

When a DTMF signal is detected on the outgoing line 120, the intercept DTMF receiver 216 sends a signal on the intercept control line 214 to the DTMF intercept switch 210, breaking the connection between the incoming DTMF receiver 38 and the control processor 36, preventing the control processor 36 from responding to a DTMF signal that did not originate with the controlling user.

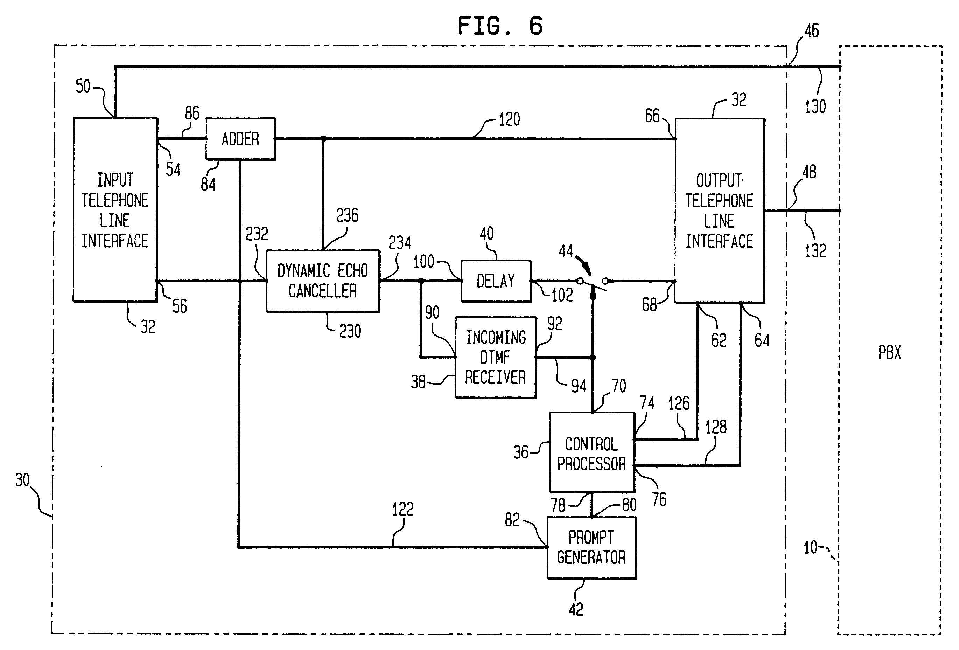

Alternatively, one could employ a dynamic echo canceler 230, instead of the intercept DTMF receiver 216 and switch 210, as shown in Figure 6. A dynamic echo canceler, of the type described in the text by Bernard Widrow and Samuel D. Stearns, Adaptive Signal Processing, Prentice-Hall, Inc. (Englewood Cliffs, N.J.: 1985), pp. 339-47, can be used to suppress unwanted DTMF signals in the conference control device 30. The canceler 230 has a signal input 232 and a signal output 234 in-line with the incoming DTMF receiver 38 and the delay module 40, and a sampling input 236 connected to the outgoing line 120.

### Parallel Call Set-up

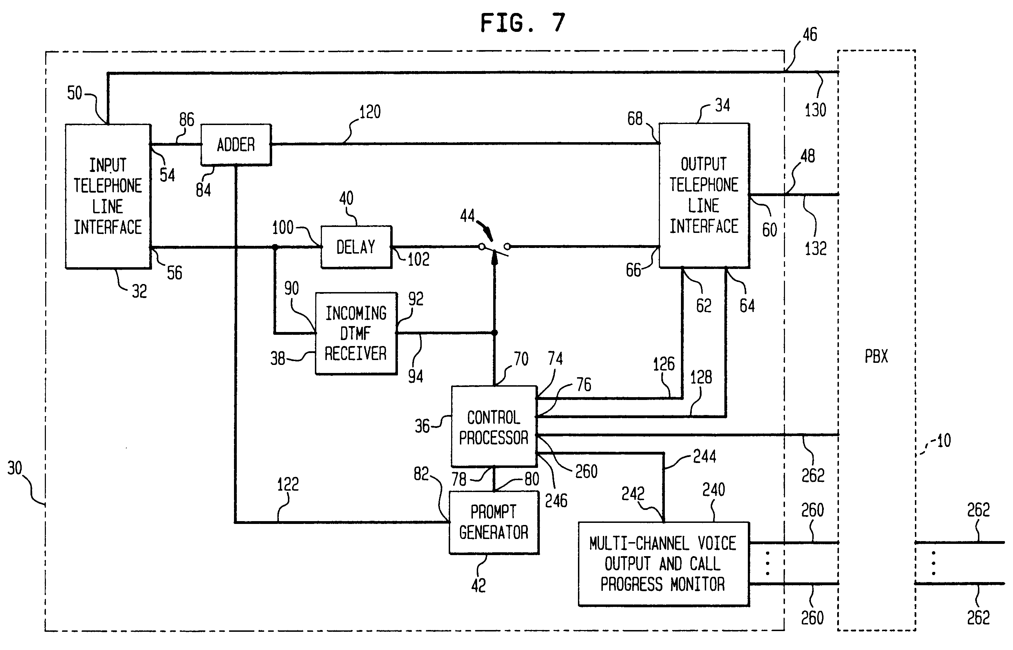

The conference control device 30 can also be configured to set up several calls in parallel, using multiple-line control interfacing with the PBX 10. As shown in Figure 7, a multiple-channel voice output and call progress monitor 240 connects to the PBX 10 through parallel lines 260 and corresponding local telephone interfaces 16 (not shown in Figure 7) which ultimately connects through the bus 20 to remote telephone interfaces 16 to external lines 262. The voice output and call progress monitor 240 receives its control signals at a control input 242 on a control line 244 connected to a control output 246 of the control processor 36. The control processor 36 also provides a command output 250 on a command line 252 to the PBX 10. The latter connection provides the necessary signalling for dialing and PBX protocols.

Upon receiving the appropriate request from the controlling user, the control processor 36 will direct the PBX 10 on the command line 252 to dial the requested stations. During this process, the voice output and call progress monitor 240 will oversee the calling of the requested stations, through the external lines 262. Once the stations are on line, they are routed through the conference bridge to the output telephone line interface 34.

The circuitry of Figure 7 will permit the controlling user to program the conference control device 30 to call all conference stations at a predetermined time. Also, it will enable the user to obtain the benefit of the less expensive line rates available to the PBX 10.

As a further refinement, the conference control device 30 could provide call back outcalling. First, the user would dial into the PBX 10, access the conference control device 30, request a call-back, and then hang up. After a predetermined interval, if not immediately, the PBX 10, under the direction of the conference control device 30, would call the user, and offer control of the conference process to the user.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. An apparatus enabled by inchannel control signals from a controlling user for controlling a conference bridge, comprising:
means for detecting a control signal; and
means, responsive to the control signal, for controlling the conference bridge.

2. An apparatus as set forth in claim 1, further including means, responsive to the means for detecting, for blocking the control signal from the conference bridge.

3. An apparatus as set forth in claim 1, further including means for selectively recording the conference.

4. An apparatus as set forth in claim 3, further including means for controlling the level of recording.

5. An apparatus as set forth in claim 1, further including means for sending signals to the controlling user.

6. An apparatus as set forth in claim 1, further including means for detecting and intercepting control signals originating with a non-controlling user.

7. An apparatus as set forth in claim 6, wherein the means for detecting and intercepting includes intercept receiver means.

8. An apparatus as set forth in claim 6, wherein the means for detecting and intercepting includes echo cancelling means.

9. An apparatus as set forth in claim 1, further including means for calling a plurality of remote stations in parallel.

10. An apparatus as set forth in claim 1, wherein the control signals are inband.

11. An apparatus as set forth in claim 1, wherein the control signals are DTMF.

12. A method of controlling a conference bridge with inchannel control signals from a controlling user, comprising the steps of:
detecting a control signal; and
in response to the control signal, controlling the conference bridge.

13. A method as set forth in claim 12, further including the step of blocking the control signal from the conference bridge in response to the step of detecting.

14. A method as set forth in claim 12, further including the step of selectively recording the conference.

15. A method as set forth in claim 14, further including the step of controlling the level of recording.

16. A method as set forth in claim 12, further including the step of sending signals to the controlling user.

17. A method as set forth in claim 12, further including the step of detecting and intercepting control signals originating with a non-controlling user.

18. A method as set forth in claim 17, wherein the step of detecting and intercepting includes the step of receiving the incoming control signal.

19. A method as set forth in claim 17, wherein the step of detecting and intercepting includes the step of echo cancelling.

20. A method as set forth in claim 12, further including the step of calling a plurality of remote stations in parallel.

21. A method as set forth in claim 12, wherein the control signals are inband.

22. A method as set forth in claim 12, wherein the control signals are DTMF.
